# EUROPÄISCHE PATENTSCHRIFT

(11) **EP 3 392 106 B1**
(45) Veröffentlichungstag und Bekanntmachung des Hinweises auf die Patenterteilung: **04.03.2020**
(21) Anmeldenummer: 18167726.1
(22) Anmeldetag: 17.04.2018
(51) Int. Cl.: B60T 13/22, F16D 59/02, F16D 65/28, F16D 66/00, F16D 121/06

(54) **BREMSLÜFTGERÄT MIT STELLZYLINDERANORDNUNG**
BRAKE LIFTING DEVICE WITH AN ACTUATION CYLINDER ARRANGEMENT
DISPOSITIF DE LEVAGE DE FREIN AVEC UN DISPOSITIF DE CYLINDRE D'ACTIONNEMENT

(30) Priorität: 21.04.2017 DE 102017108489
(43) Veröffentlichungstag der Anmeldung: 24.10.2018
(73) Patentinhaber: Pintsch Bubenzer GmbH, 57548 Kirchen-Wehbach (DE)
(72) Erfinder: Gentzsch, Iris, 79189 Bad Krozingen (DE); Gentzsch, Torsten, 79189 Bad Krozingen (DE)
(74) Vertreter: MFG Patentanwälte Meyer-Wildhagen Meggle-Freund Gerhard PartG mbB

(56) Entgegenhaltungen:
- DE-A1-102011 085 273
- DE-A1-102012 205 859
- DE-A1-102012 212 836
- DE-A1-102013 105 445
- US-A1- 2007 013 333
- US-A1- 2014 207 352

## Beschreibung

### TECHNISCHES GEBIET

Die vorliegende Offenbarung bezieht sich allgemein und insbesondere auf ein Bremslüftgerät mit einer hydraulischen Stellzylinderanordnung zum Betätigen einer Bremsanordnung, wobei die Stellzylinderanordnung ein Zylinderrohr und einen im Zylinderrohr zwischen einer ersten und zweiten Arbeitsstellung verstellbaren Stellkolben umfasst.

### TECHNISCHER HINTERGRUND

Es sind allgemein eine Vielzahl von federbelasteten Bremsanlagen bekannt, bei denen eine Federkraft über ein kraftverstärkendes Hebelsystem auf Bremselemente wirkt, die dann wiederum an einem entsprechenden Bremskörper (zum Beispiel einer Scheibe oder einer Trommel) angreifen. Sie sind in der Regel als Sicherheitsbremsen ausgelegt und arbeiten nach dem Fail-safe-Prinzip. Das heißt die Bremsen sind so ausgelegt, dass sie im Störfall, zum Beispiel bei einem Stromausfall, automatisch schließen und die zu bremsenden, bewegten Teile möglichst schnell zum Stillstand bringen oder in einer bestimmten Position festhalten (zum Beispiel bei Hebezeugen oder Aufzügen).

Dazu ist es zunächst notwendig, die Bremsen in geöffnetem, also im gelüfteten Zustand zu halten. Dazu dienen sogenannte Bremslüftgeräte, welche im aktivierten Zustand gegen die Bremsfederkraft arbeiten, diese aufheben, die Bremse öffnen und im (geöffneten) gelüfteten Zustand festhalten. Besonders verbreitet sind elektrohydraulische Bremslüftgeräte, die parallel zur Bremsfeder auf das Bremshebelgestänge wirken.

Es gibt Bremslüftgeräte, die nach folgendem Prinzip arbeiten: Zum Lösen oder Lüften der Bremse wird ein Antrieb (in der Regel ein Elektromotor) in Bewegung versetzt. Dieser Antrieb wirkt auf eine Kreiselpumpe, die im Betrieb ein Hydraulikmedium unter Druck setzt und fördert, das seinerseits auf eine Zylinderkolbenfläche wirkt, die über eine Stellstange mit dem Bremshebelgestänge gekoppelt ist. Dabei wirkt bei einer bestimmten Drehzahl ein bestimmter Druck auf die Stellkolbenfläche, der wiederum eine bestimmte Stellkraft auf das Gestänge ausübt und so die Rückstellkraft der Bremsfeder neutralisiert und die Bremsanordnung im geöffneten Zustand hält.

Ein anderer Ansatz besteht darin, ein Bremslüftgerät im Aussetzbetrieb zu betreiben, d. h. nach dem Aufbau eines bestimmten Betriebsdrucks am Zylinder wird dieser über geeignete Schaltventile gehalten und zum Bremsen wieder abgebaut. So ein Bremslüftgerät ist beispielsweise aus der DE 10 2013 105 446 A1 bekannt. Bei so einem Bremslüftgerät wird der erforderliche Arbeitsdruck in einer Stellzylinderanordnung über eine Pumpe aufgebaut. Der Arbeitsdruck ist dabei so hoch, dass ein Stellkolben, der im Zylinderrohr der Stellzylinderanordnung verstellbar ist, eine erste Arbeitsstellung einnimmt (ausgefahrener Zustand), in der er die Kräfte einer Bremsfeder überwindet und die Bremsanordnung im geöffneten bzw. gelüfteten Zustand hält. Sobald der erforderliche Arbeitsdruck aufgebaut ist, wird die Pumpe abgeschaltet und ein zwischen Stellzylinderanordnung und Hydraulikpumpe wirkendes Rückschlagventil verhindert den Druckabbau aus der Stellzylinderanordnung.

Zum Erfassen des erforderlichen Arbeitsdrucks (Verstelldruck) dient ein mechanischer Druckschalter, der bei Erreichen des Arbeitsdrucks ein entsprechendes Schaltsignal/Stoppsignal an einen elektrischen Antriebsmotor einer Hydraulikpumpe liefert. Bei mechanischen Druckschaltern kann es wegen interner Leckagen zu einem schnellen Druckabfall kommen, der zu einem unkontrollierten An- und Abschalten des Antriebsmotors führt. So ein Serienan- und abschalten des Antriebsmotors bzw. der Pumpe ist unerwünscht, führt zu hohem Verschleiß und gegebenenfalls zum Ausfall des Bremslüftgeräts.

Da die verwendeten Hydrauliköle eine sehr niedrige Viskosität aufweisen, kann es auch schon bei geringen Leckagen zu einem so starken Druckabbau kommen, dass der Druckschalter anspricht und die Pumpe aktiviert, selbst wenn die gewünschte Endstellung des Stellkolbens noch zuverlässig eingenommen wird.

Bei den oben dargestellten Bremslüftgeräten wird der die Bremsanordnung betätigende Bremskolben zwischen einer ersten Arbeitsstellung (ausgefahrener Zustand) und einer zweiten Arbeitsstellung (eingefahrener bzw. fast eingefahrener Zustand) im Betrieb hin-und-her verstellt. Die erste Arbeitsstellung betrifft dabei einen Lüft- bzw. Lösezustand und die zweite Arbeitsstellung den Bremszustand. Die zweite Arbeitsstellung verändert sich jedoch im Laufe der Zeit, und zwar dadurch, dass sich die eigentlichen Bremselemente (Bremsbacken und Bremsscheiben) bei wiederholten Bremsvorgängen abnutzen. Das bedeutet, im Laufe der Zeit verschiebt sich die zweite Arbeitsstellung dahingehend, dass der Bremskolben im Bremszustand (Bremslüftgerät deaktiviert) immer weiter eingefahren wird.

Das heißt der sogenannte Resthub des Kolbens verringert sich immer mehr in dem Maße, wie sich die Bremselemente abnutzen. Da die Veränderung des Resthubs ein Maß für den Verschleiß für die Bremselemente ist, ist es bisher üblich, den Resthub durch regelmäßige Inaugenscheinnahme des Kolbenwegs über dort angebrachte Markierungen festzustellen. Wird ein stark verringerter Resthub festgestellt oder eine Unterschreitung eines Mindestresthubs, so werden die entsprechenden Bauteile in einer Revision ausgewechselt bzw. überarbeitet (Austausch der Bremsbacken, Austausch der Bremsscheibe). Diese regelmäßige Überwachung des Resthubs ist aufwändig und bei Bremsanlagen, die schwer zugänglich sind, aufwändig und teuer.

Es gibt Anwendungen, bei denen die Bremslüftgeräte so schwer zugänglich sind, dass eine regelmäßige Überwachung nicht lohnt, sondern die Verschleißteile in regelmäßigen Abständen ausgetauscht werden, selbst dann wenn es nicht erforderlich wäre. Dies erhöht die Betriebskosten solcher Anlagen.

Aus der DE 10 2013 105 445 A1 ist ein Ansatz bekannt, bei dem ein Sensor die Stellung des Stellkolbens in der Stellzylinderanordnung detektiert. Bei Ausfall oder Verstellung des Sensors ist keine Kolbenstellung zu detektieren.

Aufgabe ist es, ein verbessertes Bremslüftgerät zur Verfügung zu stellen.

### ZUSAMMENFASSUNG

Nach einem ersten Aspekt zeigt die vorliegende Offenbarung ein Bremslüftgerät mit einer hydraulischen Stellzylinderanordnung zum Betätigen einer Bremsanordnung, wobei die Stellzylinderanordnung ein Zylinderrohr und einen im Zylinderrohr zwischen einer ersten und zweiten Arbeitsstellung verstellbaren Stellkolben umfasst und am Zylinderrohr mehrere in Umfangsrichtung kranzartig angeordnete Aufnahmen angeordnet sind, von denen wenigstens zwei einen Sensor tragen, der dazu ausgebildet ist, eine erste Arbeitsstellung des Stellkolbens zu detektieren, wobei beim Detektieren der ersten Arbeitsstellung ein erster Sensor ein Schaltsignal an eine auf die Stellzylinderanordnung wirkende Druckeinrichtung generiert und ein zweiter Sensor ein Schaltsignal an eine Steuerungseinrichtung abgibt und wobei die Sensoren (407a, 407b) und Aufnahmen (406) so aufeinander abgestimmt sind, dass der Abstand eines signalauslösenden Sensorelements (408) zu einem ersten Auslöseelement (409) einstellbar ist, so dass das Schaltsignal der Sensoren (407a, 407b) in einer von der ersten Arbeitsstellung abweichenden Pilotarbeitsstellung ausgelöst wird.

Weitere Aspekte und Merkmale ergeben sich aus den abhängigen Ansprüchen, der beigefügten Zeichnung und der nachfolgenden Beschreibung von Ausführungsformen.

### KURZBESCHREIBUNG DER ZEICHNUNG

Ausführungsformen werden nun beispielhaft und unter Bezugnahme auf die beigefügte Zeichnung beschrieben. Darin zeigt:
- Fig. 1: eine perspektivische Ansicht einer ersten Ausführungsform einer Stellzylinderanordnung für ein erfindungsgemäßes Bremslüftgerät;
- Fig 2: eine Schnittdarstellung der in Fig. 1 gezeigten Stellzylinderanordnung im Einbauzustand;
- Fig. 3: eine perspektivische Ansicht eines erfindungsgemäßen Bremslüftgeräts;
- Fig. 4: eine perspektivische Ansicht einer Stellzylinderanordnung für ein Bremslüftgerät und
- Fig. 5a bis 5c: Schnittdarstellungen der in Fig. 4 gezeigten Stellzylinderanordnung in unterschiedlichen Betriebsstellungen

### BESCHREIBUNG VON AUSFÜHRUNGSFORMEN

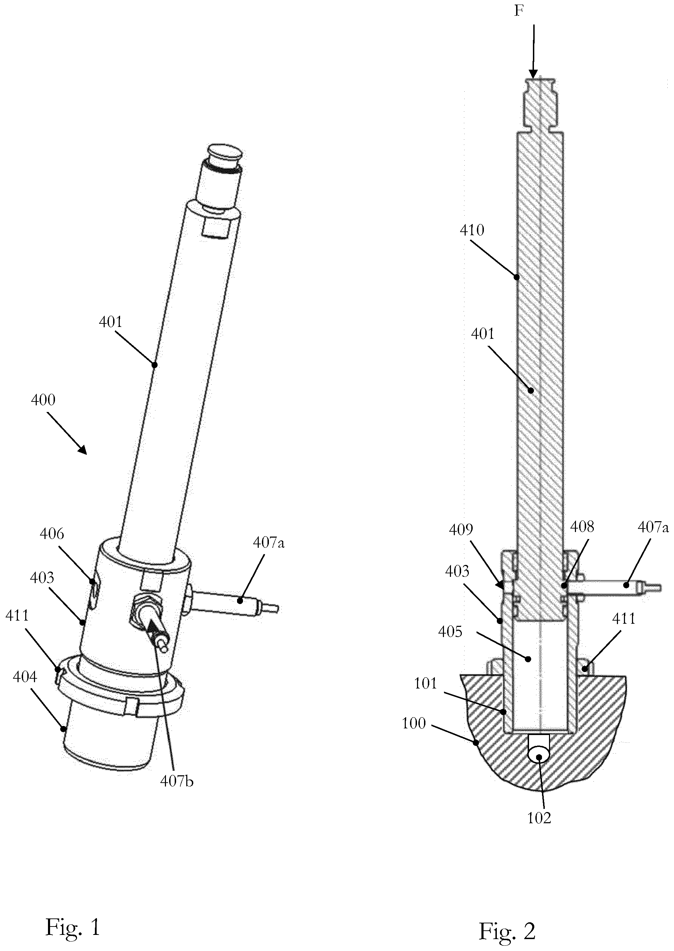

Vor einer detaillierten Beschreibung der Ausführungsform unter Bezugnahme auf Fig. 1 folgen zunächst allgemeine Erläuterungen zu den Ausführungsformen.

Die Erfindung gemäß dem ersten Aspekt zeichnet sich dadurch aus, dass am Zylinderrohr mehrere in Umfangsrichtung kranzartig angeordnete Aufnahmen angeordnet sind, von denen wenigstens zwei einen Sensor tragen, die jeweils dazu ausgebildet ist, eine erste Arbeitsstellung, insbesondere die Endstellung des Stellkolbens im ausgefahrenen Zustand, zu detektieren und zu signalisieren.

Der erste Sensor generiert dabei ein Schalt- oder Stellsignal an eine auf die Stellzylinderanordnung wirkende Druckeinrichtung (z. B. elektronischer Antriebsmotor einer Pumpe) und der zweite Sensor gibt ein weiteres entsprechendes Signal an eine Steuerungseinrichtung ab (z. B. über eine Datenleitung oder ein Datenbussystem).

Dadurch, dass am Zylinderrohr mehrere in Umfangsrichtung kranzartig angeordnete Aufnahmen angeordnet sind, ist es möglich, die Sensoren wahlweise an unterschiedlichen Positionen anzubringen. Damit kann das Zylinderrohr, das beispielsweise in eine Druckaufnahme eingeschraubt wird, unabhängig von dessen endgültiger Drehstellung nach dem Einschrauben im bevorzugten Umfangssektor mit Sensoren bestückt werden, die dann an einer gewünschten, gut zugänglichen Position radial vom Zylinderrohr abstehen.

Dadurch, dass nicht der Druck im System, sondern die Arbeitsstellung des Stellkolbens im Zylinderrohr detektiert wird, können kleine Druckschwankungen im System auftreten, ohne dass eine Betätigung der Druckeinrichtung stattfindet, da sich die Stellung des Stellkolbens nicht verändert. Die Druckeinrichtung wird erst dann wieder geschaltet, wenn der Stellkolben seine erste Arbeitsstellung verlässt bzw. um einen bestimmbaren Betrag so weit von dieser Arbeitsstellung abweicht (weiter eingefahrener Zustand), dass diese Stellungsveränderung von den Sensoren detektiert wird und diese ein entsprechendes Signal abgeben.

Als Druckeinrichtung kann hier eine elektrisch angetriebene Druckpumpe oder aber auch ein großvolumiger Druckspeicher mit entsprechenden Stellventilen dienen.

Der zweite Sensor dient dazu, ein Schaltsignal an eine zusätzliche Steuerungseinrichtung abzugeben. Dies kann beispielsweise eine übergeordnete Steuerung sein (beispielsweise eines Krans), bei der die Bremsanordnung bzw. das Bremslüftgerät eine Komponente darstellt.

Ergänzend sind die Sensoren und Aufnahmen so aufeinander abgestimmt, dass der Abstand eines signalauslösenden Sensorelements (zum Beispiel der aktiven Sensorfläche) zu einem ersten Auslöseelement einstellbar ist, so dass das Schaltsignal der Sensoren in einer von der ersten Arbeitsstellung abweichenden Pilotarbeitsstellung ausgelöst werden kann. Die Einstellbarkeit eines Sensorelements erlaubt es, das Ansprechverhalten des Sensors in gewünschter Weise so zu verändern, dass der Sensor früher oder später bzw. bei größerer oder geringerer Nähe des Auslöseelements bereits auslöst.

Das Erfassen einer Pilotarbeitsstellung kann beispielsweise dann sinnvoll sein, wenn eine Antriebspumpe ein bestimmtes Nachlaufverhalten hat, d.h. dass sie eine gewisse Nachpumpwirkung aufweist, die dazu ausreicht, den Kolben in die eigentliche Endarbeitsstellung zu bringen. Wird dazu das Nachlaufverhalten der Pumpe genutzt, so wird die gewünschte Arbeitsstellung schonender eingestellt, nämlich ohne dass der Kolben mit schlagartiger Verzögerung an seinen Anschlag ausgefahren wird.

Dabei gibt es Ausführungen, bei denen der Sensor als induktiver Sensor ausgebildet ist, der die Stellung eines an der Kolbenstange ausgebildeten ersten Auslöseelements erfasst, welches in der ersten Arbeitsstellung im Wirkbereich eines signalauslösenden Sensorelements des Sensors angeordnet ist. Induktive Sensoren oder induktive Näherungsschalter sind besonders zuverlässig und geeignet, die Position eines Stellelements genau zu erfassen, welches in den Wirkbereich eines signalauslösenden Sensorelements gelangt. In der Regel dient eine aktive Sensorfläche, die an der Stirnseite eines induktiven Näherungsschalters angeordnet ist, als signalauslösendes Stellelement.

Es gibt Ausführungen, bei denen das Auslöseelement im Inneren des Zylinderrohrs angeordnet ist. In diesem Fall kann das eigentliche Auslöseelement ein Kolbenabsatz sein, der den Druckraum gegen die Umgebung abdichtet und/oder ein Ende des Kolbens im Zylinderrohr führt. Eine solche Nutzung bereits vorhandener Bauteile vereinfacht das erfindungsgemäße Bremslüftgerät.

Bei anderen Bremslüftgeräten ist am Zylinderrohr eine verstellbare Aufnahmeanordnung angeordnet, in der eine Aufnahme angeordnet ist, die einen Sensor trägt, der dazu ausgebildet ist, eine zweite Arbeitsstellung des Stellkolbens zu detektieren und der Sensor beim Detektieren der zweiten Arbeitsstellung ein Signal an eine Anzeigevorrichtung abgibt, welche die zweite Arbeitsstellung anzeigt. Bei der zweiten Arbeitsstellung handelt es sich typischerweise um den eingefahrenen oder fast eingefahrenen Zustand des Stellkolbens. Sie signalisiert dann z. B. den "Bremse geschlossen"-Zustand.

Dabei gibt es Ausführungen, bei denen die zweite Arbeitsstellung eine Revisionsstellung, insbesondere eine Resthubstellung des Bremslüftgeräts anzeigt. Damit ist es möglich, ggf. per Ferndiagnose, eine (Grenz- oder Mindest-)-Resthubstellung zu erkennen, ohne dass dazu eine genaue Inspektion der Bremse vor Ort erforderlich wäre.

Es gibt Ausführungen, bei welchen die Aufnahmevorrichtung in einer Umfangsrichtung und/oder in einer axialen Richtung zu einer Längsachse der Stellzylinderachse verstellbar ist. Damit lässt sich die Position des Sensors bzw. eines signalauslösenden Sensorelements in gewünschter Weise zur Kolbenstange anordnen.

Dabei gibt es Ausführungen, bei welchen der Sensor als induktiver Sensor ausgebildet ist, der die Stellung eines an der Kolbenstange verstellbar angeordneten Auslöseelements erfasst, welches in der zweiten Arbeitsstellung im Wirkbereich eines signalauslösenden Sensorelements angeordnet ist. Auf diese Weise ist es möglich, die Stellzylinderanordnung mit Sensor und Auslöseelement so aufeinander abzustimmen, dass die gewünschte zweite Arbeitsstellung genau und individuell einstellbar ist.

Dabei gibt es Ausführungen, bei welchen das Auslöseelement als ein auf der Kolbenstange fixierbarer Stellring ausgebildet ist. Dies stellt eine besonders einfache, flexible, nachrüstbare und robuste Lösung dar.

Es gibt Ausführungen, bei welchen die Anzeigevorrichtung eine optische Anzeigevorrichtung, insbesondere eine LED-Anzeigevorrichtung, ist. Damit wird die zweite Arbeitsstellung deutlich optisch signalisiert. Die Ausführung als LED-Anzeige ist robust, langlebig und energiesparend. So kann beispielsweise durch einen signalisierten Farbwechsel (zum Beispiel von Rot nach Grün) das Einnehmen der zweiten Arbeitsstellung signalisiert werden, insbesondere dann, wenn es sich dabei um eine Revisionsstellung (Mindestresthub erreicht) handelt.

Es gibt Ausführungen, bei denen die Anzeigevorrichtung an einer (gut einsehbaren) Außenfläche des Bremslüftgeräts angeordnet ist und so ausgebildet ist, dass bei Erreichen der zweiten Arbeitsstellung ein Lichtsignal ausgesendet oder verändert wird. Dieses Lichtsignal ist auch von weitem wahrzunehmen, über eine optische Erfassungseinrichtung (Überwachungskamera) oder auch mit bloßem Auge.

Es gibt Ausführungen, bei denen die Lösung gemäß dem ersten Aspekt der Erfindung und die andere Ausführung miteinander kombiniert wird. Bei so einer Lösung wird sowohl die erste Arbeitsstellung (zum Beispiel der ausgefahrene Zustand des Stellkolbens) und die zweite Arbeitsstellung (zum Beispiel der eingefahrene Zustand bzw. die Resthub- oder Revisionsstellung) mithilfe geeigneter Sensoren erfasst werden. Die dabei erfassten Schaltsignale können dabei in beliebiger Kombination zur
- Steuerung des Bremslüftgeräts oder seiner Komponenten,
- zur Anzeige der Arbeitsstellungen über am Bremslüftgerät selbst vorgesehene Anzeigevorrichtungen,
- zur Anzeige der Arbeitsstellungen an anderen Anzeigegeräten und
- zur Bedatung von übergeordneten externen und/oder internen Steuergeräten genutzt werden.

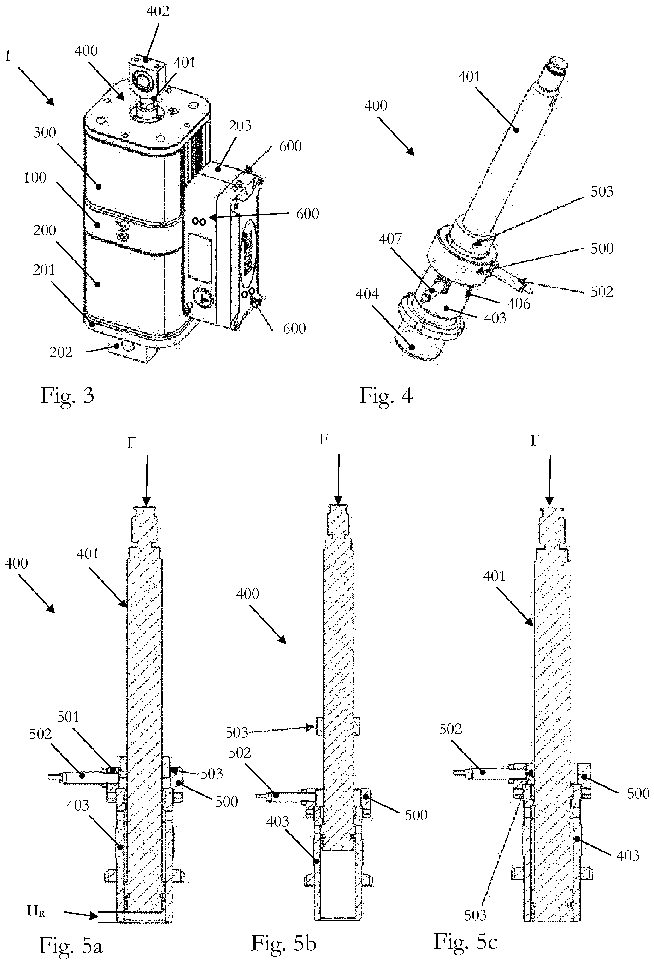

Nun zurückkehrend zu den Figuren. Fig. 3 zeigt ein erfindungsgemäßes Bremslüftgerät 1, und zwar mit seinen Hauptkomponenten, der Funktionseinheit 100, einer elektrischen Antriebseinheit 200 sowie einer Tankbaugruppe 300, die von einer Stellzylinderanordnung 400 durchsetzt wird. Am Boden 201 der elektrischen Antriebseinheit 200 sind zwei Anschlussösen 202 ausgebildet. Den Deckel 301 durchsetzt der Stellkolben 401 der Stellzylinderanordnung 400. Er weist an seinem Ende ebenfalls eine Anschlussöse 402 auf. Der Stellkolben 401 ist in Fig. 1 in seiner Ruhelage, also in seiner eingefahrenen Stellung (zweite Arbeitsstellung) dargestellt. Seitlich an der elektrischen Antriebseinheit 200 ist ein Anschlusskasten 203 angebracht.

Fig. 1 zeigt in perspektivischer Ansicht die Stellzylinderanordnung 400. Sie umfasst den Stellkolben 401, der in einem Zylinderrohr 403 verschieblich aufgenommen ist. Am unteren Ende des Zylinderrohrs 403 ist ein Außengewinde 404 vorgesehen, mit dem das Zylinderrohr in eine entsprechende Aufnahme 101 der Funktionseinheit 100 einschraubbar ist (vgl. Fig. 2).

In die Aufnahme 101 mündet ein Zu- und Abfluss 102, über den das Innere 405 (Druckkammer) des Zylinderrohrs 403 mit Hydraulikflüssigkeit gefüllt wird. Dazu dient eine nicht weiter dargestellte elektrische Pumpeinheit. Beim Füllen der Druckkammer 405 mit Hydraulikflüssigkeit wird dort ein Innendruck aufgebaut, der den Stellkolben 401 gegen eine auf das obere Ende wirkende Federkraft F der nicht weiter dargestellten Bremsanordnung in seine erste Arbeitsstellung bringt. Dabei wird der Stellkolben 401 vollständig ausgefahren und löst die Bremsanordnung.

Im Zylinderrohr 403 sind mehrere als Bohrungen ausgeführte Aufnahmen 406 vorgesehen, in die Sensoren 407 eingesetzt sind. Die Sensoren 407 sind als induktive Sensoren ausgebildet und weisen eine ins Innere des Zylinderrohrs 403 gerichtete Stirnfläche 408 auf, die als signalauslösendes Sensorelement dient. Die Stirnfläche 408 erfasst die Annäherung eines ringförmigen Absatzes 409 des Stellkolbens 401, der als Auslöseelement dient.

Die Sensoren 407a und 407b erfassen also die in Fig. 2 dargestellte erste Arbeitsstellung des Stellkolbens 401, in der der Absatz 409 im Bereich der Stirnfläche 408 der Sensoren 407a und 407b angeordnet ist.

Dabei gibt der eine Sensor 407a ein entsprechendes Schaltsignal an die Pumpeinheit und schaltet diese ab. Der zweite Sensor 407b gibt ein Signal als Stellungssignal an eine beliebige Steuereinrichtung entweder des Bremslüftgeräts 1 selbst oder an ein Steuergerät einer Anlage, von der das Bremslüftgerät 1 ein Bestandteil ist. Das Signal zeigt den Zustand "Bremse gelüftet" an.

Bei einem Druckabfall in der Kammer 405 bewirkt die Federkraft F, dass sich der Stellkolben in Kraftrichtung in Richtung Funktionseinheit 100 bewegt. Dabei verlässt der Absatz 409 den Bereich der Stirnflächen 408 des Sensors 407a, 407b. Dadurch verändert sich dessen Signal, das gegebenenfalls einen Schaltvorgang auslöst, der die Hydraulikpumpe wieder in Betrieb setzt, um den Druck wieder so weit aufzubauen, dass sich der Stellkolben 401 wieder in seine erste Arbeitsstellung bewegt. Weiter kann aber auch ein Signal genutzt werden werden, das gegebenenfalls anzeigt, dass das Bremslüftgerät 1 nicht mehr in seinem "Bremse gelüftet"-Zustand ist.

Über die Anordnung der Sensoren 407 in den Aufnahmen 406 kann der Abstand der Stirnfläche 408 zur Umfangsfläche des Absatzes 409 verändert werden. Damit ist die Ansprechempfindlichkeit des Sensors 407a, 407b bezüglich einer Veränderung der Axialposition des Absatzes 409 entlang der Achse 410 einstellbar. Ist die Stirnfläche 408 nah am Absatz 409, so erfolgt die Detektion sehr empfindlich trennscharf. Das Signal verändert sich, sobald die Umfangsfläche in den Bereich der Stirnfläche 408 gelangt. Ist die Stirnfläche 408 weiter entfernt, erfolgt die Detektion "verschwommener" und etwas verzögerter, also erst dann, wenn der Absatz 409 weiter in den Bereich der Stirnfläche 408 verschoben ist.

Die mehreren kranzartig angebrachten Aufnahmen 406 erlauben es, die Sensoren 407a, 407b in solche Aufnahmen 406 einzuschrauben, die für die Sensoren 407 eine günstige Umfangsorientierung des Zylinderrohrs 403 in der Funktionseinheit 100 bieten. In dieser Einschraublage wird das Zylinderrohr 403 über eine Kontermutter 411 fixiert. Anschließend werden der oder die Sensoren 407a, 407b in die bevorzugten Aufnahmen 406 eingesetzt und dort fixiert.

Fig. 4 zeigt eine Ausführungsform der Stellzylinderanordnung 400 gemäß einem zweiten Aspekt der Erfindung. Hier ist anstelle oder optional zusätzlich zu den Aufnahmen 406 und den Sensoren 407 eine weitere Aufnahmeanordnung am Zylinderrohr 403 angeordnet, die als fixierbarer Außenring 500 ausgebildet ist. Im Außenring 500 ist eine Aufnahmebohrung 501 vorgesehen, in der ein Sensor 502 angebracht ist. Dieser Sensor 502 erfasst die Stellung eines an der Kolbenstange 412 verstellbar fixierbaren Auslöseelements, welches als Stellring 503 ausgebildet ist. Damit lässt sich auch eine zweite Arbeitsstellung des Stellkolbens 401 erfassen/signalisieren (vgl. Fig. 5a, 5b und 5c).

Die Stellung in Fig. 5a zeigt den Stellkolben 401 in einer sogenannten Resthubstellung, in die der Stellkolben 401 gebracht wird, wenn dieser, unter Wirkung der Federkraft F, in das Zylinderrohr eingeschoben wird. Der Stellring 503 ist dabei so angeordnet, dass er erst dann in den Wirkbereich des Sensors 502 gelangt, wenn der Resthub HR unter einen einstellbaren Grenzwert fällt. Der Resthub H_{R} verändert sich bei Benutzung der Bremse, und zwar mit zunehmender Abnutzung der Bremselemente (Bremsscheibe, Bremsbeläge). Wird also ein bestimmter Resthub unterschritten, zeigt der Sensor 502 dies an, nämlich dann, wenn der Stellring 503 in den Wirkbereich des Sensors 502 gelangt. Dieser sendet daraufhin ein Signal an eine Anzeige- und/oder Steuerungseinrichtung.

Wird der Resthub HR völlig aufgebraucht (Fig. 5c), schlägt der Stellkolben 401 an und verhindert den vollständigen Aufbau des Bremsmoments, da die Beweglichkeit des Bremsgestänges der Bremsanordnung durch den blockierten Stellkolben 401 eingeschränkt ist. Die Bremswirkung kann dann erheblich reduziert werden und zu einem kritischen Zustand der Bremsanlage führen. Dies wird durch rechtzeitige Erfassung und Signalisierung des minimalen Resthubs verhindert.

Die Anzeigevorrichtung kann in Form von einem oder mehreren LED-Elementen 600 ausgestaltet werden, die auf dieses Schaltsignal hin ein Lichtsignal aussenden. Das Lichtsignal kann beispielsweise darin bestehen, dass ein Farbwechsel von grün nach rot stattfindet oder eine Blinkfrequenz erhöht wird. Dieser Signalwechsel zeigt dann einen Revisionszustand an, der über die Verringerung des Resthubs HR bzw. die Unterschreitung eines minimalen Resthubs ausgelöst wird. Fig. 5b zeigt die Stellzylinderanordnung 401 im ausgefahrenen Zustand (vgl. auch Fig. 2). In dieser Stellung wird der Stellring 503 nicht vom Sensor 502 detektiert.

Fig. 5c zeigt den Stellkolben 401 in vollständig eingefahrener Stellung. Hier wird wiederum die Stellung des Stellrings 503 vom Sensor 502 detektiert. In dieser Ausführung dient der Stellring 503 nicht dazu, einen Revisionszustand anzuzeigen, sondern dazu, einen "Bremse geschlossen"-Zustand darzustellen.

Es können auch zwei Sensoren 502 vorgesehen werden, die in axial versetzter Lage angeordnet sind. Einer signalisiert dann den "Bremse geschlossen"-Zustand und einer ggf. den Revisionszustand. Die in den Fig. 5a bis 5c dargestellte Anordnung kann auch mit den in den Fig. 1 und 2 dargestellten Anordnungen kombiniert werden. Damit lassen sich die Einstell-, Steuerungs- und Anzeigemöglichkeiten kombinieren.

Weitere Ausführungen und Variationen der Erfindung ergeben sich für den Fachmann im Rahmen der Ansprüche.

### BEZUGSZEICHENLISTE

- 1: Bremslüftgerät
- 100: Funktionseinheit
- 101: Aufnahme
- 102: Zu-und Abfluss
- 200: elektrische Antriebseinheit
- 201: Boden
- 202: Anschlussösen
- 203: Anschlusskasten
- 300: Tankbaugruppe
- 400: Stellzylinderanordnung
- 401: Stellkolben
- 402: Anschlussöse
- 403: Zylinderrohr
- 404: Außengewinde
- 405: Kammer
- 406: Aufnahmen
- 407: Sensoren (407a, 407b)
- 408: Stirnfläche
- 409: Absatz
- 410: Längsachse
- 411: Kontermutter
- 412: Kolbenstange
- 500: Außenring
- 501: Aufnahmebohrung
- 502: Sensor
- 503: Stellring
- 600: LED-Einrichtung/LED-Element

## Patentansprüche

1. Bremslüftgerät (1) mit einer hydraulischen Stellzylinderanordnung (400), einer Steuerungseinrichtung und einer Druckeinrichtung zum Betätigen einer Bremsanordnung, wobei die Stellzylinderanordnung (400) ein Zylinderrohr (403) und einen im Zylinderrohr (403) zwischen einer ersten und zweiten Arbeitsstellung verstellbaren Stellkolben (401) umfasst, und am Zylinderrohr (403) mehrere in Umfangsrichtung kranzartig angeordnete Aufnahmen (406) angeordnet sind **dadurch gekennzeichnet, dass** von den Aufnahmen (406) wenigstens zwei jeweils einen Sensor (407a, 407b) tragen, der dazu ausgebildet ist, eine erste Arbeitsstellung des Stellkolbens (401) zu detektieren, wobei beim Detektieren der ersten Arbeitsstellung ein erster Sensor (407a) ein Schaltsignal an die auf die Stellzylinderanordnung (400) wirkende Druckeinrichtung generiert und ein zweiter Sensor (407b) ein Schaltsignal an die Steuerungseinrichtung abgibt, wobei die Sensoren (407a, 407b) und Aufnahmen (406) so aufeinander abgestimmt sind, dass der Abstand eines signalauslösenden Sensorelements (408) zu einem ersten Auslöseelement (409) einstellbar ist, so dass das Schaltsignal der Sensoren (407a, 407b) in einer von der ersten Arbeitsstellung abweichenden Pilotarbeitsstellung ausgelöst wird.

2. Bremslüftgerät (1) nach Anspruch 1, wobei jeder der Sensoren (407a, 407b) als induktiver Sensor ausgebildet ist, der die Stellung des an einer Kolbenstange (412) ausgebildeten ersten Auslöseelements (409) erfasst, welches in der ersten Arbeitsstellung im Wirkbereich des signallauslösenden Sensorelements (408) angeordnet ist.

3. Bremslüftgerät (1) nach Anspruch 1 oder 2, wobei das erste Auslöseelement (409) im Innern des Zylinderrohres (403) angeordnet ist.

## Claims

1. A brake release device (1) having a hydraulic actuating cylinder arrangement (400), a control device, and a pressure device for actuating a brake arrangement, the actuating cylinder arrangement (400) comprising a cylindrical tube (403) and an actuating piston (401) adjustable between a first and a second working position in the cylindrical tube (403), and
a plurality of receptacles (406) being disposed like a wreath in the circumferential direction on the cylindrical tube (403), **characterized in that** at least two of the receptacles (406) support one sensor (407a, 407b) each implemented for detecting a first working position of the actuating piston (401), wherein upon detecting the first working position a first sensor (407a) generates a switch signal to the pressure device acting on the actuating cylinder arrangement (400) and a second sensor (407b) emits a switch signal to the control device, wherein the sensors (407a, 407b) and receptacles (406) are mutually tuned such that the spacing of a sensor element (408) emitting a signal from a first initiating element (409) is adjustable, so that the switch signal of the sensors (407a, 407b) is initiated at a pilot working position deviating from the first working position.

2. The brake release device (1) according to claim 1, wherein each of the sensors (407a, 407b) is implemented as an inductive sensor for capturing the position of the first initiating element (409) implemented on a piston rod (412) and disposed in the first working position in the effective range of the sensor element (408) emitting the signal.

3. The brake release device (1) according to claim 1 or 2, wherein the first initiating element (409) is disposed in the interior of the cylindrical tube (403).

## Revendications

1. Releveur de frein (1) avec un ensemble vérin de réglage hydraulique (400), un dispositif de contrôle et un dispositif de pression pour actionner un ensemble de frein, dans lequel l'ensemble vérin de réglage hydraulique (400) comprend un corps de vérin (403) et un piston de réglage (401) qui est réglable dans le corps de vérin (403) entre une première et une deuxième position de fonctionnement, et plusieurs logements (406) sont disposés en couronne, dans la direction circonférentielle, sur le corps de vérin (403), **caractérisé en ce que**
au moins deux des logements (406) portent respectivement un capteur (407a, 407b) qui est conçu pour détecter une première position de fonctionnement du piston de réglage (401), un premier capteur (407a) générant, lors de la détection de la première position de fonctionnement, un signal de commutation vers le dispositif de pression agissant sur l'ensemble vérin de réglage (400) et un deuxième capteur (407b) émettant un signal de commutation vers le dispositif de contrôle,
les capteurs (407a, 407b) et les logements (406) étant correlés de telle manière que la distance qui sépare un élément capteur déclencheur de signal (408) d'un premier élément de déclenchement (409) est réglable, de sorte que le signal de commutation des capteurs (407a, 407b) est déclenché dans une position de fonctionnement pilote différente de la première position de fonctionnement.

2. Releveur de frein (1) selon la revendication 1, dans lequel chacun des capteurs (407a, 407b) est réalisé sous forme de capteur inductif, lequel détecte la position du premier élément de déclenchement (409) agencé sur une tige de piston (412), lequel élément de déclenchement (409) est disposé, dans la première position de fonctionnement, dans la zone active de l'élément capteur déclencheur de signal (408).

3. Releveur de frein (1) selon la revendication 1 ou 2, dans lequel le premier élément de déclenchement (409) est disposé à l'intérieur du corps de vérin (403).
